# EUROPEAN PATENT APPLICATION

(11) **EP 3 246 816 A1**
(43) Date of publication of application: **22.11.2017**
(21) Application number: 15877549.4
(22) Date of filing: 12.06.2015
(51) Int. Cl.: G06F 9/445

(54) **METHOD FOR IMPROVING SYSTEM FIRMWARE PROGRAMMING SPEED**

(30) Priority: 12.01.2015 CN 201510015528
(71) Applicant: Yutou Technology (Hangzhou) Co., Ltd., Hangzhou City, Zhejiang 311199 (CN)
(72) Inventor: LIU, Shenghua, Hangzhou Zhejiang 311199 (CN)
(74) Representative: Patentanwälte Olbricht Buchhold Keulertz
(86) International application number: PCT/CN2015/081408
(87) International publication number: WO 2016/112633

(57) **Abstract**

The invention relates to a semiconductor field, especially to a method for increasing programming speed of a system firmware. The invention adjusts the size of an intermediate file system, generates the corresponding mirror of the system according to the size of the adjusted intermediate file system, then program the mirror of the system into the flash memory of the device. Thus the size of the mirror of the system is reduced efficiently, the time of making the mirror of the system and transmitting the mirror to the memory is saved, the time of programming the mirror of the system into the flash memory is saved, and the programming speed of the system firmware is increased efficiently.

## Description

### BACKGROUND OF THE INVENTION

### 1. Field of the Invention

The present disclosure relates to a semiconductor field, more specifically, to a method for increasing programming speed of a system firmware.

### 2. Description of the Related Art

The system firmware (such as ROM) refers to a solidified software which writes a certain program in a flash memory in a specific hardware system. The firmware of a mobile is equivalent to the system of a mobile, and refreshing the firmware is equivalent to refreshing the system.

The system program generates the mirror of the system firstly, then the mirror of the system is transmitted to the memory of the device to programme into the memory of the device. To meet the requirement of adding new data during the process of using, the size of the mirror of the system generated by the program "system" is much larger than the size of the program "system". For example, a system program with a size of 500M (Mbit) may results in a mirror of the system "system.img" with a size of 1G (Gbit) or even more. Thus the system firmware is so large that the time-consuming of making the mirror is long and the speed of programming the mirror into the hardware is slow.

In the prior art, to increase programming speed of a system firmware, some manufacturers compress the system intermediate file with the system file which can store the data, then generate the mirror of the system according to the compressed intermediate file system, transmit the mirror to the memory. Although the method accelerates the speed of transmitting the file into the memory, but prior to programming the mirror of the system into the flash memory, the mirror of the system should decompressed and it is also time-consuming. Therefore, it is difficult for the people skilled in the art to shorten the time of making the mirror of the system and programming the mirror into the hardware device efficiently, and to increase programming speed of a system firmware without changing other performance.

### SUMMARY OF THE INVENTION

To increase programming speed of a system firmware efficiently, the invention provides a method for increase programming speed of a system firmware. The method is implemented by adjusting the size of an intermediate file system, generating a corresponding mirror of the system according to the size of the adjusted intermediate file system, programming the mirror of the system into the flash device. The method is:

The technical solution of the present invention is:

A method for increasing programming speed of a system firmware, applied to a terminal device with a file system and a flash memory, comprising the steps of:
(a) generating an intermediate file system according to the required build-in program data in the file system;
(b) adjusting the size of the intermediate file system;
(c) generating a mirror of the file system according to the adjusted intermediate file system;
(d) programming the mirror of the file system into the flash memory;
wherein, the difference value between the size of the mirror of the file system and the size of the required build-in program data in the file system is D, and 0≤D≤16M (Mbit).

Preferably, the method for increasing programming speed of a system firmware, wherein;
after the step of generating a mirror of the file system and prior to the step of programming the mirror of the file system into the flash memory of the terminal device, further comprising a step of transmitting the mirror of the file system to the memory of the terminal device.

Preferably, the method for increasing programming speed of a system firmware, further comprising:
(e) after programming the mirror of the file system into the memory, adjusting the size of the file system to the size prior to the adjustment of the intermediate file system when executes the system firmware for the first time.

Preferably, the method for increasing programming speed of a system firmware, wherein the file system comprises format of ex2, ex3, ex4, ntfs and fat.

Preferably, the method for increasing programming speed of a system firmware, wherein the terminal device is a mobile or a tablet computer.

The invention has the following benefits:

To increase programming speed of a system firmware efficiently, the invention provides a method for increase programming speed of a system firmware. The method is implemented by adjusting the size of an intermediate file system, generating a corresponding mirror of the system according to the size of the adjusted intermediate file system, transmitting the mirror of the system to the memory and programming the mirror of the system into the flash memory. Thus the size of the mirror of the system is reduced efficiently, the time of making the mirror of the system and transmitting the mirror to the memory device is saved, the time of programming the mirror into the flash memory is saved, and the programming speed of the system firmware is increased efficiently.

### BRIEF DESCRIPTIONS OF THE DRAWINGS

Figure 1 shows the procedure schematic view of the method for programming of a system firmware in prior art;
Figure 2 shows the procedure schematic view of the method for increasing programming speed of a system firmware according to the invention;
Figure 3 shows the procedure schematic view of the method for programming of a system firmware according to the invention.

### DETAILED DESCRIPTIONS

By referring to the detailed description for the unlimited embodiments with the accompanying drawings, the invention and the feature, outline and advantage thereof will be more obvious. The same signs in the drawings indicate the same part. The drawings are not drawn in proportion and they just intend to show the principle of the invention.

To address the problem which the programming speed of a system firmware is low and the time of programming is long, the invention provides a method for increase programming speed of a system firmware. The method is implemented by adjusting the size of an intermediate file system, generating a mirror of the system according to the size of the adjusted intermediate file system, transmitting the mirror of the system to the memory and programming the mirror of the system into the flash memory of the device. Thus the size of the mirror of the system is reduced efficiently, the time of making the mirror of the system and transmitting the mirror to the memory is saved, the time of programming the mirror into the flash memory is saved, and the programming speed of the system firmware is increased efficiently. Meanwhile, the time of debugging by the engineer is reduced, the time of hardware manufacturing in the assembly line is reduced. The following illustration is further depicted by combining the drawings and the embodiments without being the limit of the invention.

The system firmware is a huge set of files, such as the file of "system.img", "userdata.img" and "ccache.img" in the Andriod system. The embodiment only describe the file of "system.img", any modifications of other files in the system according to the principle of the invention fall in the scope of the invention.

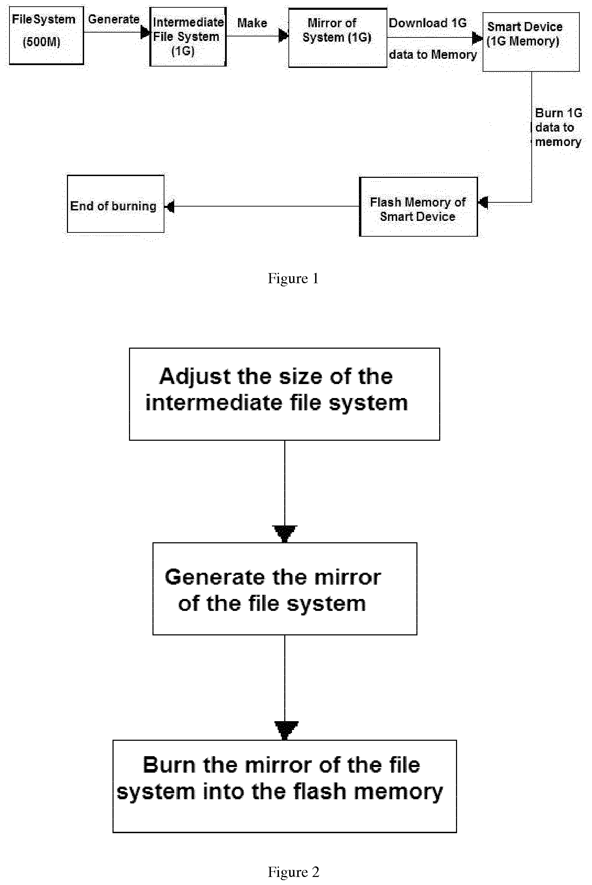

Figure 1 shows the procedure schematic view of the method for programming of a system firmware in prior art. For example, there is a "system/" catalog with a size of 500M (Mbit) need to be stored a 500M (Mbit) data. Due to the existence of the file system with a size of 500M, preferably, it generates an intermediate file system with a size of 1024M. The size of the intermediate file system includes the system files and the contained data capacity. Then generate a mirror file "system.img" with a size of 1024M according to the intermediate file system with a size of 1024M, transmit the generated mirror file "system.img" with a size of 1024M to the memory (such as to the memory of the smart device), that is, download 1G (Gbit) data to the memory as shown in Figure 1. Finally, program the mirror file "system.img" with a size of 1G transmitted to the memory into the flash memory of the smart device. Therefore, the file system with a size of 500M need to generate an intermediate file system including the file system with a size of 500M and required storing data capacity, then generate the mirror of the system according to the size of the intermediate file system. This results in the problems of big size of the mirror of the system and long time of the transmitting and programming. In the prior art, to avoid the problems, the generated intermediate file system is compressed, the compressed files reduces the size of the intermediate file system, then the compressed intermediate file system is transmitted to the memory. After the intermediate file system is decompressed, it is programmed into the flash memory of the device, which is time-consuming. Such device includes a mobile and a tablet computer.

Figure 2 shows the procedure schematic view of the method for increasing programming speed of a system firmware. Firstly, adjust the size of an intermediate file system, then generate a corresponding mirror of the system according to the size of the adjusted intermediate file system, transmit the generated mirror of the system to the memory, finally program the mirror of the system into the flash memory of the device.

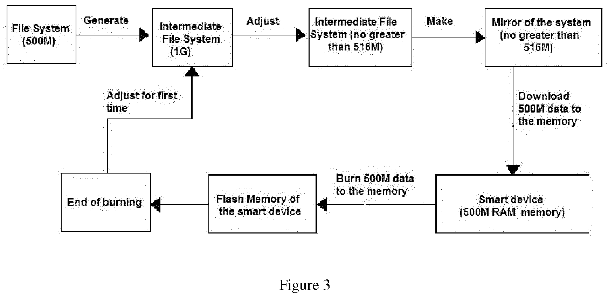

Figure 3 shows the procedure schematic view of the method for programming of a system firmware. For example, there is a flash memory need to be stored a 500M file system with a 500M data.

According to regular method, the file system with a size of 500M generates an intermediate file system with a size of 1024M. Preferably, in file system with a format of "ex3", execute the command "$resize2fs -M system.img" to adjust the intermediate file system with a size of 1G (1204M) into a file system with a size of 500M. In another embodiment, select the format of "ntfs", when the mirror of the system is located in the device "loop0", execute the command "ntfsresize -b -s 516M/dev/sdf" to adjust the intermediate file system with a size of 516M. The format of the mature file system in the prior art are all support adjusting the size of the file system (such as ext3/4, ntfs, fat). Then generate the corresponding mirror of the system according to the size (500M) of the adjusted intermediate file system. It is noted that the size of the generated mirror of the system is a lightly greater than the size of the intermediate file system, so as to accommodate the files required by the system. Configure the size of the files according to the different files required by the system, but it is limited in 16M, namely, the mirror of the system is no greater than 516M.

Transmit the mirror of the system no greater than 516M to the memory, and program the mirror into the flash memory of the device. Thus the programming of the system firmware is accomplished. The flash memory of the device comprises, but be not limited to the mobile and the tablet computer. It is noted that the size of the system firmware programming to the flash memory should be adjusted to the size of intermediate file system before adjustment, so as to accommodate the data with a size of 500M. Such adjustment so easy, and as an embodiment, that executing the command "$resize2fs /dev/sdf " when the mirror of the system generated by the file system "ext3" is located in partition "sdf". If the file system has the format of "ntfs", execute the command "ntfsresze -x /dev/sf" to restore the size of the programmed system hardware to the size of the intermediate file system. The method of the invention increases programming speed of the system firmware, reduces the time of programming of the system firmware efficiently. For example, if the size of the intermediate file system of the mirror of the system of the popular Andriod mobile with a size of 1.5G is adjusted to 800M to meet the requirement of the file system, the programming time is reduced from 118s to 66s.

In conclusion, the invention adjusts the size of an intermediate file system prior to generating a mirror of the system, generates the mirror of the system according to the size of the adjusted intermediate file system. Thus the time of making the mirror of the system and transmitting the mirror to the memory is saved efficiently, the time of programming the mirror of the system into the flash memory of device is saved, the time of programming the mirror into the hardware is reduced efficiently, and the programming speed of the system firmware is increased.

The people skilled in art should be understood that the various embodiments can be implemented by combining the prior art and above-mentioned embodiments, and it is not described hereafter. The various embodiments do not impact the essential content of the invention, and it is not described hereafter.

While the present disclosure has been described in connection with certain exemplary embodiments, it is to be understood that the invention is not limited to the disclosed embodiments, the device and structure, which are not specifically described, should be understood as the common manner in the art to be implemented; any people skilled in the art can make possible changes and modifications, or equivalents thereof for the technical solution of the invention according to the above method without falling out of the scope of the invention. Therefore, the various modifications and equivalent arrangements without departing away from the technical solution of the invention, are included within the spirit and the scope of the technical solution of the invention.

## Claims

1. A method for increasing programming speed of a system firmware, applied to a terminal device with a file system and a flash memory, comprising the steps of:
(a) generating an intermediate file system according to the required build-in program data in the file system;
(b) adjusting the size of the intermediate file system;
(c) generating a mirror of the file system according to the adjusted intermediate file system;
(d) programming the mirror of the file system into the flash memory;
wherein, the difference value between the size of the mirror of the file system and the size of the required build-in program data in the file system is D, and 0≤D≤16M (Mbit).

2. The method for increasing programming speed of a system firmware as claimed in Claim 1, wherein:
after the step of generating a mirror of the file system and prior to the step of programming the mirror of the file system into the flash memory of the terminal device, further comprising a step of transmitting the mirror of the file system to the memory of the terminal device.

3. The method for increasing programming speed of a system firmware as claimed in Claim 1, further comprising;
(e) after programming the mirror of the file system into the memory, adjusting the size of the file system to the size of the intermediate file system prior to the adjustment when executes the system firmware for the first time.

4. The method for increasing programming speed of a system firmware as claimed in Claim 1, wherein the file system comprises the format of ex2, ex3, ex4, ntfs and fat.

5. The method for increasing programming speed of a system firmware as claimed in Claim 1, wherein the terminal device is a mobile or a tablet computer.
